Europäisches Patentamt

European Patent Office

Office européen des brevets

(19)

(11) Publication number: **0 125 099**

**A1**

(12) **EUROPEAN PATENT APPLICATION**

(21) Application number: **84302950.5**

(22) Date of filing: **02.05.84**

(51) Int. Cl.³: **F 16 L 3/12**

(30) Priority: **05.05.83 GB 8312312**

(43) Date of publication of application:
**14.11.84 Bulletin 84/46**

(84) Designated Contracting States:
**AT BE CH DE FR IT LI LU NL SE**

(71) Applicant: **BICC Public Limited Company**
**21, Bloomsbury Street**
**London, WC1B 3QN(GB)**

(72) Inventor: **Lyon, Robert Cyril**
**2, Ludovic Terrace**
**Wigan Greater Manchester(GB)**

(72) Inventor: **Fearns, Peter**
**7, Belfield Crescent**
**Huyton Merseyside(GB)**

(74) Representative: **Denton, Michael John**
**BICC plc Patents and Licensing Department 38 Ariel Way**
**Wood Lane**
**London W12 7DX(GB)**

(54) Securing device.

(57) A cable securing device comprises a strap (2) which can pass around elongate members (1) to be secured and tensioning means for tensioning the strap. The tensioning means comprises a plate having upstanding walls (5, 6) at each end between which the strap can pass and a rod (9) having a longitudinally extending slit and an eye (11), the rod being rotatably securable in aligned apertures in a pair of upstanding walls of the plate with the eye on the outside of one of the walls; and a key for rotating the rod to and locking it in a required tensioning position has a base (13) and two arms (14, 15) extending from the base in substantially the same direction; the base extends through the eye of the rod and the base and/or the arms are resilient to allow relative movement of the ends of the arms. At least one wall upstanding from the plate has slots (18, 19) located and so dimensioned that once the strap is tensioned to the required degree the key can be turned in the eye to bring the arms of the key into releasable snap engagement in the slots.

Fig.1.

Fig.2.

# SECURING DEVICE

0125099

This invention relates to a device for securing at least one cable, pipe or other elongate member to a support and/or for securing together two or more cables, pipes or other elongate members, for convenience, hereinafter being referred to by the expression "cable securing device".

Cable securing devices are known in which a strap is wrapped around elongate members to secure them together, one end of the strap being fixed to a tensioning device comprising a rotatable split rod, and the free end of the strap being held in the slit in the rod. When the rod is rotated the strap is tensioned around the elongate member (and possibly support members) to secure them together. It is of course important that the split rod is thereafter prevented from unintenional rotation leading to loss of strap tension (or to excessive tension) and various locking arrangements have been proposed. The cable securing device of British Application No: 2081802A is among the few that have been commercially exploited on a significant scale; as far as the Applicants are aware, the devices of (for example) US Patent No: 1490618, British Patents Nos: 1225298 and 1500628 and British Application No: 2085066A have not been found to satisfy market needs.

The present invention provides a cable securing
device that, in contrast to those previously available,
meets all of the following requirements:-

(i) it is easily assembled

(ii) it can be locked in a multiplicity of
positions (every half-turn of the split rod)

(iii) it can be tensioned and locked quickly and
easily by hand, without any tools

(iv) failure to lock is immediately apparent

(v) once locked resists unlocking on accidental
impact

(vi) once locked can be released for modification
or adjustment, but only by the use of a
suitable tool (so reducing risk of
interference by unauthorised persons) According to the present invention, a cable
securing device comprises a strap which can pass around
elongate members to be secured and tensioning means for
tensioning the strap, the tensioning means comprising a
plate having upstanding walls at each end between which
the strap can pass; a rod having a longitudinally
extending slit and an eye, the rod being rotatably
securable in aligned apertures in a pair of upstanding
walls of the plate with the eye on the outside of one of
the walls; and operating means for rotating the rod to
and locking it in a required tensioning position,
characterised in that the said operating means comprises a key having a base and two arms extending from the base in substantially the same direction, the base extending through the eye of the rod and the base and/or the arms being resilient to allow relative movement of the ends of the arms, and at least one wall upstanding from the plate having slots located and so dimensioned that once the strap is tensioned to the required degree the key can be turned in the eye to bring the arms of the key into releasable snap engagement in the slots.

Preferably the base and arms of the key are constituted by a U-shape bend from a length of rod. Preferably also the free end of at least one of the arms is extended and the extension so bent as to make the key captive in the eye, so avoiding the need for any separate means to prevent loss of the key. In a first preferred arrangement, the base, the arms and the extension or extensions form a substantially closed loop of rectangular or other shape; in a second preferred arrangement each of the arms is extended in an individual loop.

Preferably the slots for engaging the arms of the key are formed in the wall of the said pair that is remote from the eye, but they could be formed alternatively in the wall adjacent the eye or in an additional upstanding wall provided for the purpose; or aligned slots might be found in more than one wall.

This cable securing device can either be used on its own for securing together two or more cables, or in conjunction with a base member and bar arrangement (as described and claimed in our British Patent No: 2082242B) for securing one or more cables to a support, or can be used in conjunction with a bar defined by, for example, a rung of a cable ladder, or the central portion of a U-bolt, for securing a cable or cables to the bar.

The invention is further illustrated, by way of example, with reference to the accompanying drawings in which:-

Figure 1 is a perspective view of a first form of cable securing device in accordance with the invention;

Figure 2 is an exploded view of the tensioning means used in the cable securing device of Figure 1;

Figures 3 to 6 are views, similar to Figure 2, showing four modified forms of tensioning means.

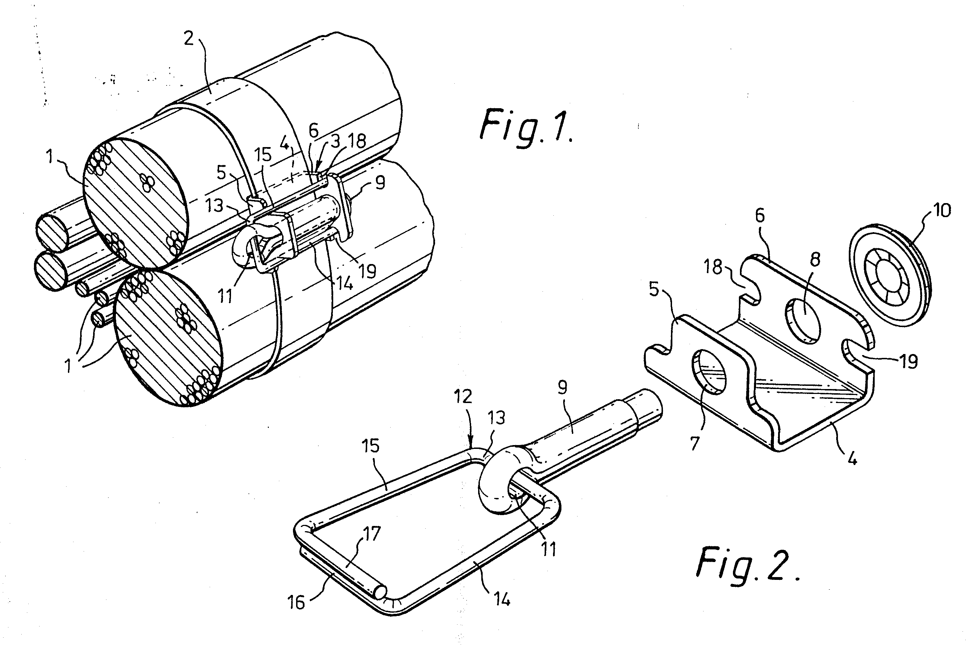

The cable securing device shown in Figures 1 and 2 is shown securing a bundle of insulated cables and/or pipes 1 together. It comprises a stainless steel strap 2 one end of which a tensioning device 3 is mounted by welding, by folding the strap around the plate or in any other suitable way.

5.                 0125099

The tensioning device comprises a stainless steel plate 4 (Figure 2) having two upstanding walls 5, 6 spaced to accommodate the strap 2 (Figure 1) between them. The walls have respective apertures 7, 8 which are aligned to receive a stainless steel split pin 9. A gripper washer 10 can be used, if desired to hold the split pin in place. Inserted through the eye 11 of the split pin 9 is a key 12 which is bent from stainless steel rod. This comprises a base 13 extending through the eye, two arms 14, 15 which extend parallel to each other in the same direction away from the base and have extensions 16, 17 which are bent inwards to form a substantially closed loop and so make the key captive in the eye 11.

The cable securing device is installed by passing the free end of the strap 2 around the cables etc. 1, preferably twice (in which case a middle portion of the strap passes between the plate 4 and the split pin 9) and then tucked into the slit of the split pin. Excess length of strap can be trimmed off if necessary. The strap is now tensioned by turning the key 12 to rotate the split pin 9 in either direction.

When the required tension is achieved, rotation is stopped with the base 13 of the key roughly parallel to the plate 4 and the key is then rotated about its base through about half a turn until the arms 14, 15 snap into slots 18, 19 (or vice versa, depending on which way up the pin is) provided in the wall 6 to receive them.

0125099

Once locked in this way, the key is unlikely to be released accidentally, even by impacts causing minor damage to the corners of the wall 6; and the stiffness of the key 12 is such that it cannot be released by finger pressure (so resisting casual vandalism) but it can be released by levering with a large screwdriver or other suitable tool.

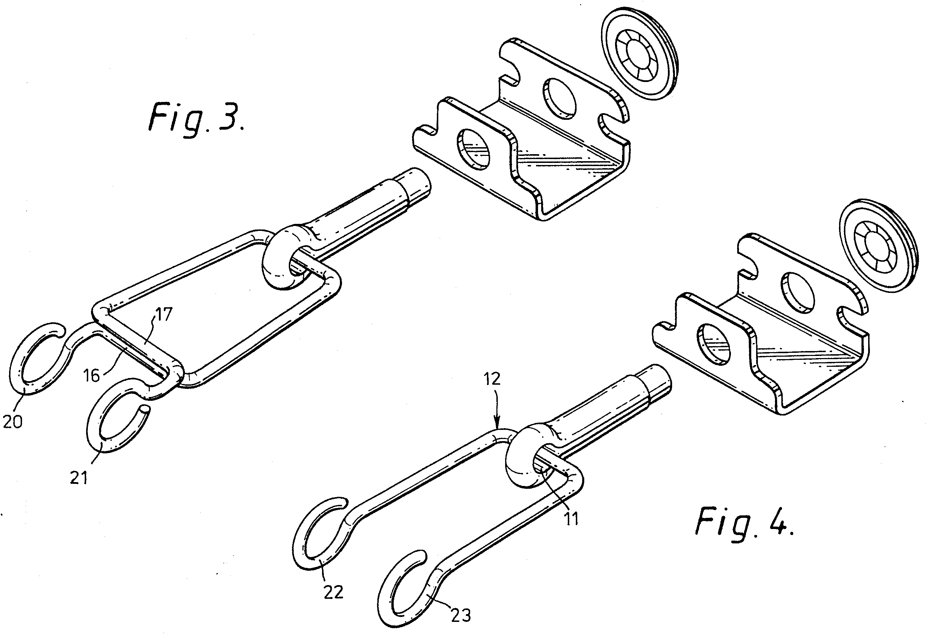

The modified device shown in Figure 3 differs only in that the extensions 16, 17 further include loops 20, 21 which can be urged together with pliers as an alternative means of release; they may also be engaged by a rod to assist tightening, though this is not normally necessary.

The modified device of Figure 4 is similar to that of Figures 1 and 2 except that the extensions 22, 23 are simple loops having the primary function of making the key 12 captive in the eye 11.

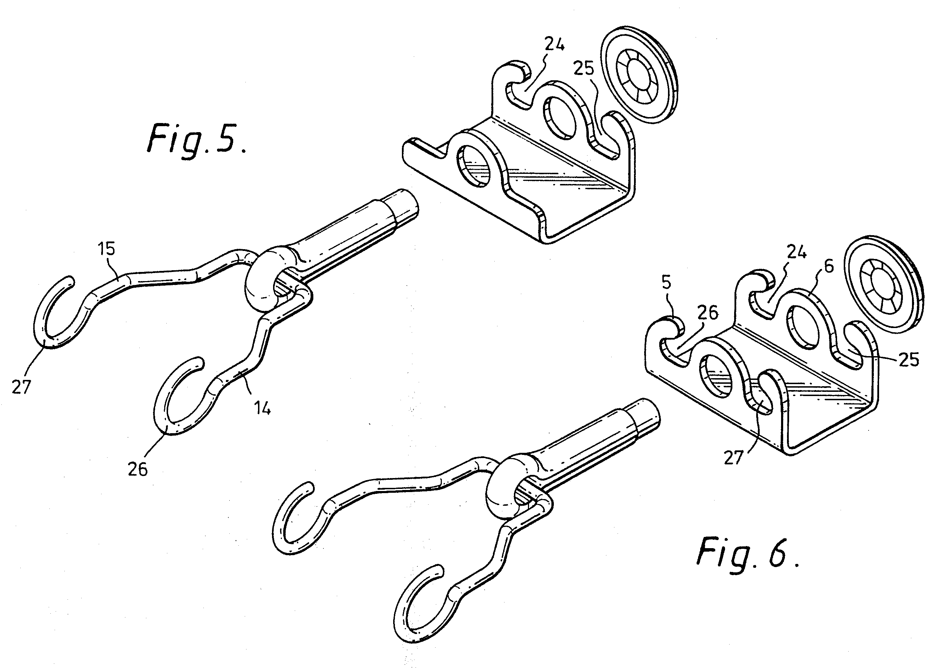

The device of Figure 5 has the slots 24, 25 opening inwardly rather than outwardly so that the arms 14, 15 need to be urged towards one another to release the key, and loops 26, 27 are provided to assist this as well as making the key captive.

The device of figure 6 differs from that of figure 5 only in having slots 24, 25, 28, 29 in both of the walls 5, 6.

7. **0125099**

CLAIMS

1. A cable securing device comprising a strap (2) which can pass around elongate members (1) to be secured and tensioning means for tensioning the strap, the tensioning means comprising a plate (4) having upstanding walls at each end between which the strap can pass; a rod having a longitudinally extending slit and an eye (11), the rod being rotatably securable in aligned apertures in a pair of upstanding walls (5,6) of the plate with the eye on the outside of one of the walls; and operating means for rotating the rod to and locking it in a required tensioning position, characterised in that the said operating means comprises a key (12) a base (13) and two arms (14,15) extending from the base in substantially the same direction, the base extending through the eye (11) of the rod and the base and/or the arms being resilient to allow relative movement of the ends of the arms, and at least one wall upstanding from the plate having slots located and so dimensioned that once the strap is tensioned to the required degree the key (12) can be turned in the eye to bring the arms of the key into releasable snap engagement in the slots.

2. A cable securing device as claimed in Claim 1 in which the base and arms of the key are constituted by a U-shape bent from a length of rod.

3. A cable securing device as claimed in Claim 2 in which the free end of at least one of the arms is extended and the extension so bent as to make the key captive in the eye.

4. A cable securing device as claimed in Claim 3 in which the base, the arms and the extension or extensions form a substantially closed loop.

5. A cable securing device as claimed in Claim 3 in which each arm is extended in an individual loop.

6. A cable securing device as claimed in any one of the preceeding claims in which the slots for engaging the arms of the key are formed in the wall of the said pair that is remote from the eye.

Fig.1.

Fig.2.

*Fig. 3.*

*Fig. 4.*

17

16

20

21

12

11

22

23

2/3

0125099

Fig.5.

Fig. 6.

3/3

0125099

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 847 292 (WOLSELEY ENGINEERING LTD.)<br>* Figure 1 * | 1 | F 16 L 3/12 |
| A | GB-A- 12 737 (E. MORIARTY)(A.D.1913)<br>* Figure 2 * | 1 | |
| A | GB-A- 711 184 (CRUIKSHANK AND COMPANY LTD. et al.)<br>* Figure 1 * | 1 | |
| A | US-A-4 036 097 (GREENWOOD)<br>* Figures 1-5 * | 1 | |
| A | FR-A- 595 684 (M.R. HOURSEAU) | | **TECHNICAL FIELDS SEARCHED (Int. Cl. ³)** |
| A | US-A-3 475 793 (H. OETIKER) | | F 16 L<br>F 16 B |

The present search report has been drawn up for all claims

| Place of search | Date of completion of the search | Examiner |
|---|---|---|
| THE HAGUE | 16-07-1984 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82